# EUROPEAN PATENT APPLICATION

(11) **EP 4 850 855 A1**
(43) Date of publication of application: **09.12.2026**
(21) Application number: 26183256.2
(22) Date of filing: 05.06.2026
(51) Int. Cl.: B23Q 11/08, G05B 19/406, E05F 15/41, G05B 19/409

(54) **MACHINE TOOL AND CONTROL METHOD FOR MACHINE TOOL DOOR**

(30) Priority: 06.06.2025 JP 2025094787
(71) Applicant: DMG Mori Co., Ltd., Nara-shi, Nara 630-8122 (JP)
(72) Inventor: HARUYAMA, Yukihiro, Nara City, Nara, 630-8122 (JP); YANAGIHARA, Keisuke, Sapporo-shi, Hokkaido, 004-0015 (JP); MIURA, Takeshi, Sapporo-shi, Hokkaido, 004-0015 (JP); ISHIGURO, Takashi, Sapporo-shi, Hokkaido, 004-0015 (JP)
(74) Representative: Isarpatent

(57) **Abstract**

A machine tool (1, 1A) includes a door (21, 21A, 22, 22A), and a servo system (SYS) that controls opening and closing of the door (21, 21A, 22, 22A). The servo system (SYS) includes a servomotor (60) that has a rotation shaft (62) and opens and closes the door (21, 21A, 22, 22A) upon rotation of the rotation shaft (62), a servo driver (70) that operates the servomotor (60), and a controller (81) connected to the servo driver (70). With the door (21, 21A, 22, 22A) held at a closed position by the servo system (SYS), upon application of an external force to the door (21, 21A, 22, 22A) in a direction of opening the door (21, 21A, 22, 22A), the servo driver (70) or the controller (81) detects torque exerted on the rotation shaft (62) by the external force. Provided that the torque is greater than or equal to a predetermined threshold, the controller (81) sends, to the servo driver (70), a command to rotate the servomotor (60) in the direction of opening the door (21, 21A, 22, 22A).

## Description

### BACKGROUND OF THE INVENTION

### Field of the Invention

The present disclosure relates to a machine tool and a control method for a machine tool door.

### Description of the Background Art

Machine tools have conventionally been known in which a door for a machining area is opened and closed by a motor. As an example of such a machine tool, Japanese Patent No. 7442704 discloses a machine tool that detects abnormalities in door opening and closing based on the torque waveform of a servomotor.

### SUMMARY OF THE INVENTION

The position of the machine tool door disclosed in Japanese Patent No. 7442704 is held by a servo lock function, and the closed door cannot be opened manually. To open the machine tool door, the operator has to operate an operation device such as a control panel.

The present disclosure provides a machine tool and a control method for a machine tool door that allow the machine tool door to be opened without operating an operation device.

According to an aspect of the present disclosure, a machine tool includes a door, and a servo system that controls opening and closing of the door. The servo system includes a servomotor that has a rotation shaft and opens and closes the door upon rotation of the rotation shaft, a servo driver that operates the servomotor, and a controller connected to the servo driver. With the door held at a closed position by the servo system, upon application of an external force to the door in a direction of opening the door, the servo driver or the controller detects torque exerted on the rotation shaft. Provided that the torque is greater than or equal to a threshold determined in advance, the controller sends, to the servo driver, a command to rotate the servomotor in the direction of opening the door.

According to another aspect of the present disclosure, a control method for a machine tool door includes: holding, by a servo system, a door of a machine tool at a closed position, the servo system including a servomotor, a servo amplifier, and a controller, the servo system controlling opening and closing of the door; with the door held at the closed position, upon application of an external force to the door in a direction of opening the door, detecting, by the servo driver or the controller, torque exerted on the servomotor by the external force; and provided that the torque is greater than or equal to a predetermined threshold, sending to the servo driver, by the controller, a command to rotate the servomotor in the direction of opening the door.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a machine tool.
Fig. 2 is a diagram illustrating opening and closing of a left door based on operation of an operation device.
Fig. 3 is a view showing a state in which the left door and a right door are fully open.
Fig. 4 is a view showing a state in which an operator is applying an external force in an opening direction to the closed left door.
Fig. 5 is a diagram for illustrating an operation of a servo system upon application of the external force shown in Fig. 4 to the left door.
Fig. 6 is a view of a settings screen provided by the operation device.
Fig. 7 is a flowchart showing a process flow when the operator opens the left door using a push-to-open function.
Fig. 8 is a perspective view of a machine tool of a type different from that of the machine tool.

### DESCRIPTION OF THE PREFERRED EMBODIMENTS

An embodiment of the present invention will be described with reference to the drawings. Like parts and components are designated by like reference signs in the following description. Their names and functions are also the same. Therefore, detailed description thereof will not be repeated.

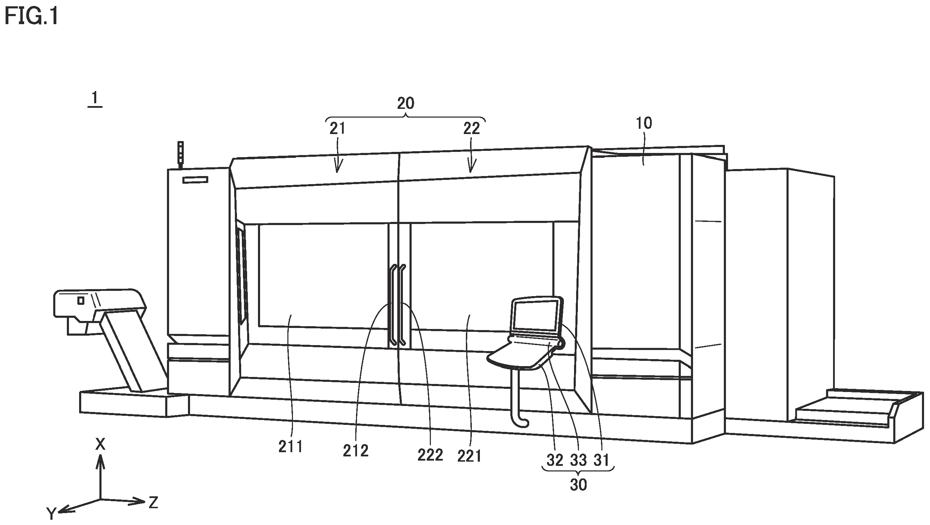

Fig. 1 is a perspective view of a machine tool according to the present embodiment. As shown in Fig. 1, a machine tool 1 includes a main body 10, a door portion 20, and an operation device 30.

In the present embodiment, a 5-axis multi-tasking machine is cited as machine tool 1, but the present disclosure is not limited thereto. Machine tool 1 may be, for example, another multi-tasking machine such as a 4-axis multi-tasking machine, a machining center such as a horizontal machining center, a turning center, or a lathe. Machine tool 1 is preferably a large-scale machine tool. An example of such a large-scale machine tool is a machine tool including a pair of workpiece spindles that hold a long workpiece from both ends (left and right in a front view of machine tool 1).

Door portion 20 covers an opening of main body 10. Door portion 20 includes a door 21 (hereinafter also referred to as "left door 21") located on the left and a door 22 (hereinafter also referred to as "right door 22") located on the right, in a front view of machine tool 1. Left door 21 and right door 22 are sliding doors.

Left door 21 includes a window portion 211 and a handle 212. Right door 22 includes a window portion 221 and a handle 222. Handle 212 is provided on the right door 22 side in the Z-axis (horizontal) direction. Handle 222 is provided on the left door 21 side in the Z-axis direction. Handles 212, 222 extend in the X-axis direction (vertical direction).

In the state shown in Fig. 1, left door 21 and right door 22 are closed. Left door 21 and right door 22 are in contact with each other at ends thereof. Left door 21 and right door 22 are movable in the Z-axis direction. When sliding in the negative direction of the Z-axis from the state shown in Fig. 1, left door 21 opens. Similarly, when sliding in the positive direction of the Z-axis from the state shown in Fig. 1, right door 22 opens.

Operation device 30 includes an upper housing 31, a lower housing 32, and a hinge portion 33. Upper housing 31 is connected to lower housing 32 by hinge portion 33. The orientation of upper housing 31 can be changed via hinge portion 33. Operation device 30 is attached to main body 10. Operation device 30 is communicatively connected to a control panel (not shown) of main body 10.

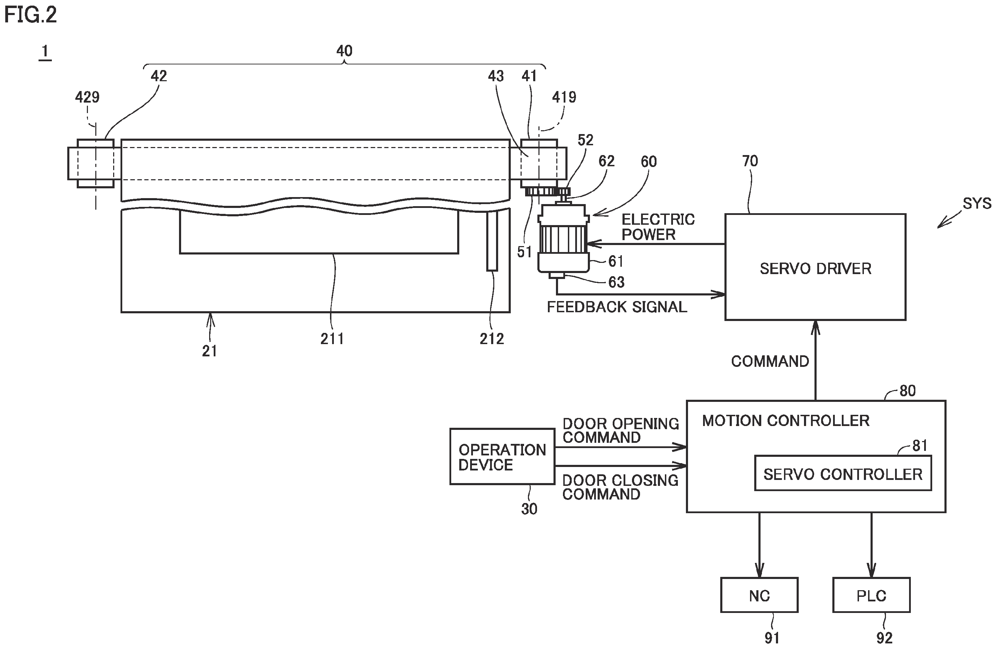

Fig. 2 is a diagram illustrating opening and closing of left door 21 based on operation of operation device 30. As shown in Fig. 2, in addition to left door 21 and operation device 30, machine tool 1 further includes a drive device 40, gears 51, 52, a servomotor 60, a servo driver 70, a motion controller 80, a numerically controlled (NC) device 91, and a programmable logic controller (PLC) 92. Servomotor 60 includes a main body 61, a rotation shaft 62, and an encoder 63. Motion controller 80 includes a servo controller 81. Note that the servo driver is also referred to as a servo amplifier.

Servomotor 60 is connected to servo driver 70. Servo driver 70 is communicatively connected to motion controller 80. More specifically, servo driver 70 is communicatively connected to servo controller 81. Similarly, operation device 30, numerically controlled device 91, and PLC 92 are also communicatively connected to motion controller 80.

Drive device 40 opens and closes left door 21. Drive device 40 includes a pair of pulleys 41, 42 and an endless belt 43. Tension is applied to belt 43 by pulleys 41 and 42. Left door 21 is secured to belt 43 by a connecting member (not shown).

Specifically, pulleys 41 and 42 are spaced apart from each other in the Z-axis direction (Fig. 1). In the present embodiment, pulley 41 is a driving pulley. Pulley 42 is a driven pulley. Pulley 41 is rotatable about a shaft 419. Pulley 42 is rotatable about a shaft 429. Shafts 419, 429 extend in the X-axis direction.

Gear 51 is fixed to shaft 419. Gear 51 is rotatable about shaft 419. The rotation of gear 51 rotates pulley 41. Gear 52 meshes with gear 51. Gear 52 is fixed to rotation shaft 62. The rotation of rotation shaft 62 rotates gear 52. Gear 51 has more teeth than gear 52. Thus, the rotational speed of gear 51 is slower than that of gear 52.

When operation device 30 accepts an operator's operation of causing left door 21 to transition from the closed state to the open state, operation device 30 sends a command to open the door to motion controller 80. Upon receipt of this command, motion controller 80 sends a command signal to servo driver 70. Specifically, servo controller 81 within motion controller 80 sends target values of rotational position, rotational speed, and torque to servo driver 70.

Servo driver 70 supplies servomotor 60 with the electric power necessary for servomotor 60 to rotate according to the above-described target values. Encoder 63 of servomotor 60 detects the actual rotational position and rotational speed of servomotor 60 and returns the detection results to servo driver 70 as a feedback signal. Servo driver 70 performs feedback control based on the target values and the feedback signal.

When electric power is supplied to servomotor 60, rotation shaft 62 rotates in a direction of opening left door 21. The rotation of rotation shaft 62 rotates gear 52. The rotation of gear 52 rotates gear 51. The rotation of gear 51 drives pulley 41. The driving of pulley 41 drives belt 43. The driving of belt 43 drives pulley 42. The driving of belt 43 causes left door 21 to begin to move in the opening direction. In the present embodiment, left door 21 moves to the open position (in the present embodiment, the fully open position).

In contrast, when operation device 30 accepts an operator's operation of causing left door 21 to transition from the open state to the closed state, operation device 30 sends a command to close the door to motion controller 80. In this case, rotation shaft 62 rotates in a direction of closing left door 21. As a result, left door 21 moves to the closed position.

In this manner, the operator can open and close left door 21 using operation device 30. Although the above has described opening and closing of left door 21, right door 22 can also be opened and closed by a servomotor (not shown) and a servo driver (not shown) connected to servo controller 81. The operator can open and close right door 22 using operation device 30.

Note that motion controller 80 also sends commands to numerically controlled device 91 and PLC 92.

Hereinafter, servomotor 60, servo driver 70, the servomotor for right door 22 (not shown), the servo driver for right door 22 (not shown), and servo controller 81 are collectively referred to as a "servo system SYS".

Servo system SYS has a control function (also referred to as a "servo lock function") of holding the position of servomotor 60 such that rotation shaft 62 does not rotate in response to an external force while servomotor 60 is at standstill. By means of the servo lock function, left door 21 is held at the closed position, for example, as shown in Fig. 1. Similarly, right door 22 is also held at the closed position, as shown in Fig. 1. This function is achieved by servo controller 81 entering a target torque value to the torque control loop of servo driver 70.

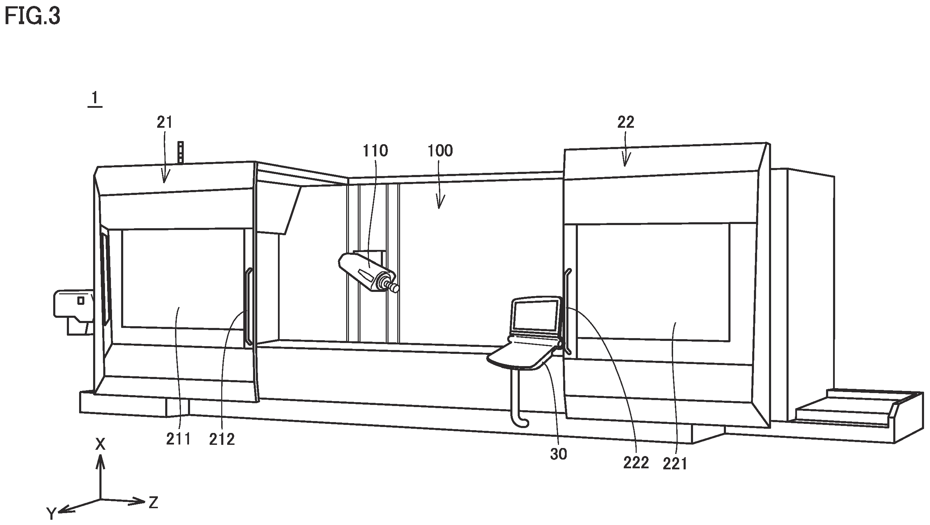

Fig. 3 is a view showing a state in which left door 21 and right door 22 are fully open. As shown in Fig. 3, machine tool 1 has a machining area 100 for machining a workpiece. A tool spindle 110 is installed in machining area 100. Left door 21 and right door 22 separate machining area 100 from the space external to machine tool 1. Left door 21 and right door 22 define machining area 100. Left door 21 and right door 22 are front doors for the entry and exit of workpieces.

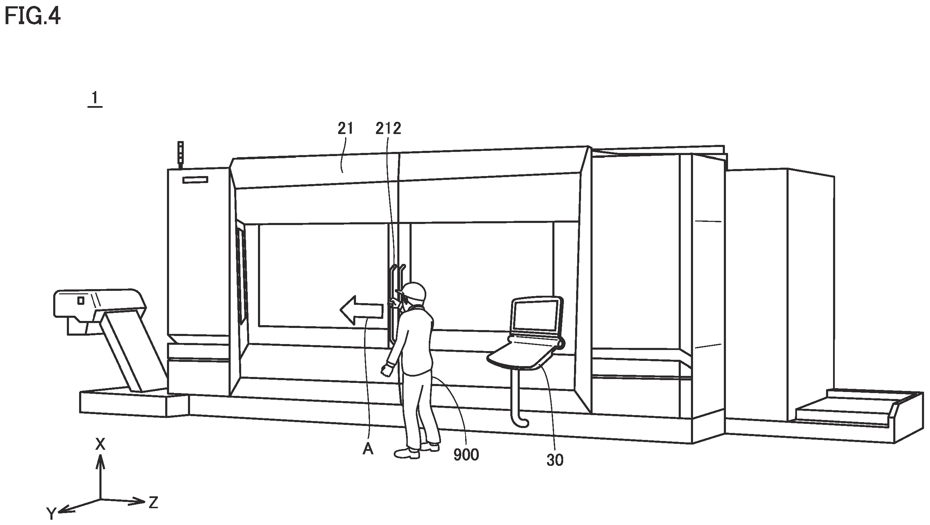

Fig. 4 is a diagram showing a state in which an operator is applying an external force in the negative direction of the Z-axis to the closed left door 21. As described above, left door 21 is held at the closed position by the servo lock function.

Specifically, in Fig. 4, the operator stands in front of right door 22 and pushes handle 212 of left door 21 in the negative direction of the Z-axis (the direction of an arrow A), thereby applying an external force to left door 21. In the present embodiment, the operator is pushing handle 212 while gripping handle 212. Note that the manner of applying external force is not limited thereto. For example, the operator may stand in front of left door 21, grip handle 212 of left door 21 with, for example, the right hand, and pull handle 212 in the negative direction of the Z-axis, thereby applying an external force.

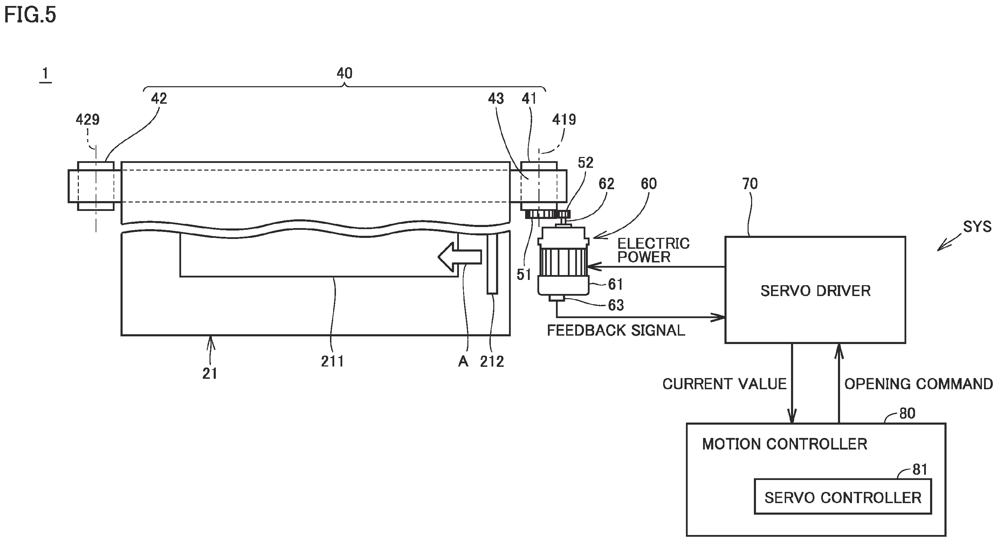

Fig. 5 is a diagram for illustrating the operation of servo system SYS upon application of the external force shown in Fig. 4 to left door 21. As shown in Fig. 5, upon application of the external force in the direction of arrow A to left door 21, torque (N·m) is applied to rotational shaft 62 of servomotor 60 via gears 51 and 52. More specifically, torque is exerted on rotational shaft 62 that begins to rotate rotation shaft 62 in the direction of opening left door 21. Note that gears 51 and 52 may not directly mesh with each other, but one or more other gears may exist between gears 51 and 52.

Servo driver 70 detects, as torque, the external force (load) applied to left door 21. Specifically, servo driver 70 detects the torque exerted on rotation shaft 62 of servomotor 60 due to the external force applied to left door 21 in the direction of opening left door 21. In the present embodiment, servo driver 70 detects the above-described torque based on the current value of the current flowing through servomotor 60 upon application of the external force and the voltage value applied to servomotor 60. Specifically, servo driver 70 calculates electric power (P) from a current value (I) and a voltage value (V) and divides electric power P by 2πω, thereby determining torque (T). Note that ω is an angular velocity of the rotor. Servo driver 70 notifies servo controller 81 of the detected torque.

Servo controller 81 determines whether the torque detected by servo driver 70 (i.e., the above-described torque exerted on rotation shaft 62 due to the external force) exceeds a predetermined threshold Th. When the torque is greater than or equal to threshold Th, servo controller 81 rotates servomotor 60 in the direction of opening left door 21. Specifically, servo controller 81 sends an opening command (specifically, the target value described above) to servo driver 70, thereby rotating rotation shaft 62 of servomotor 60.

As described above, the operator can apply an external force greater than a certain level in the direction of arrow A to the closed left door 21, thereby causing left door 21 to automatically transition to the open state. The operator can open left door 21 simply by applying, to left door 21, an external force greater than or equal to a certain level in the opening direction.

Thus, the operator does not need to operate operation device 30 to open left door 21. The operator can open left door 21 without moving to the front of operation device 30. In a large machine tool 1, as shown in Fig. 1, the operator can significantly reduce the travel distance when opening left door 21. In this way, machine tool 1 offers high machining efficiency.

Furthermore, machine tool 1 utilizes the function of servomotor 60, which opens and closes left door 21 based on a command from operation device 30, to achieve the automatic opening of left door 21 based on the external force described above. Consequently, no dedicated components such as buttons or sensors are required to achieve the above-described automatic opening of left door 21 based on the external force. Consequently, machine tool 1 offers cost advantages over machine tools that require such components.

In the present embodiment, threshold Th is set as the default value such that left door 21 opens automatically upon application of an external force of 250 N to left door 21 in the direction of arrow A. Threshold Th is set taking into account the reduction ratio provided by gears 51 and 52. Therefore, threshold Th is set individually depending on the type of machine tool 1 (specifically, the gear configuration).

Although the above description uses left door 21 as an example, right door 22 also has the same function. Specifically, the operator can apply, to the closed right door 22, an external force greater than or equal to a certain level in the direction opposite to arrow A, thereby causing right door 22 to automatically transition to the open state. The operator can open right door 22 simply by applying an external force greater than or equal to a certain level in a direction of opening right door 22.

In machine tool 1, as described above, left door 21 and right door 22 can be opened automatically simply by applying an external force greater than or equal to a certain level in the opening direction to left door 21 and right door 22 in the closed state. On the other hand, even if an external force greater than or equal to a certain level is applied to the open left door 21 and right door 22, left door 21 and right door 22 do not close automatically. This configuration ensures compliance with the standards applicable to the machine tool.

Hereinafter, assuming that the operator pushes handles 212, 222 to open left door 21 and right door 22, the function of automatically opening left door 21 and right door 22 without operating operation device 30 as described above is also referred to as a "push-to-open function" for the sake of convenience.

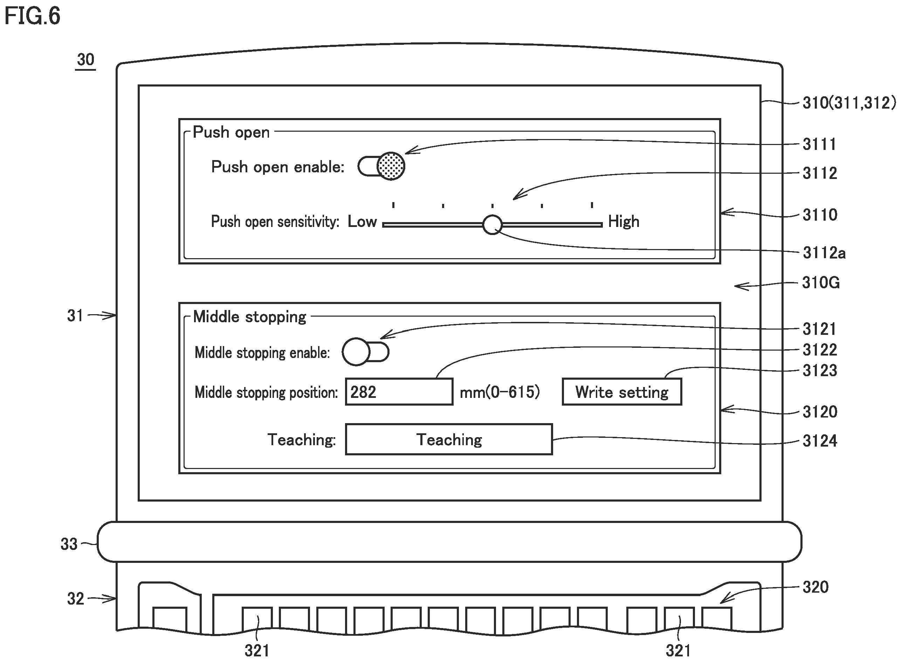

Fig. 6 is a diagram showing a settings screen (user interface: UI) provided by operation device 30. As shown in Fig. 6, upper housing 31 includes a touch screen 310. Touch screen 310 includes a display 311 and a touch panel 312. Touch panel 312 is superimposed on display 311. Lower housing 32 includes an input device 320. Input device 320 includes a plurality of operation keys 321. In the present embodiment, each operation key 321 is a physical key.

When accepting a predetermined operation, operation device 30 displays a settings screen 310G for the push-to-open function. Settings screen 310G includes an image object 3110 and an image object 3120.

Image object 3110 includes a toggle button 3111 for turning on or off the push-to-open function, and a slider 3112 for changing the magnitude of the external force required for opening left door 21 and right door 22.

In Fig. 6, the toggle button 3111 is located at the on position. When accepting the operator's operation of sliding toggle button 3111 from the on position to the off position, machine tool 1 switches the push-to-open function to off. When the push-to-open function is switched to off, servo controller 81 does not send a command (target value) for opening left door 21 to servo driver 70, even if an external force greater than or equal to a certain level is applied to left door 21 in the opening direction.

This configuration can satisfy the request from the operator who considers the push-to-open function unnecessary.

The operator can operate slider 3112 to change threshold Th described above from the default value described above. Slider 3112 is an image showing a plurality of levels of threshold Th. The operator can move a knob 3112a of slider 3112 left or right to select one of the plurality of levels (five in the present embodiment) from High level to Low level.

Operation device 30 accepts this operation.

In the present embodiment, threshold Th can be set from among the following values: 80% of the default value, 90% of the default value, the default value itself, 110% of the default value, and 120% of the default value. In this case, the external force in the Z-axis direction required for opening each of left door 21 and right door 22 is 200 N, 225 N, 250 N, 275 N, and 300 N, respectively, for the above-described values.

With this configuration, threshold Th can be set according to the operator. Typically, an appropriate threshold Th can be set based on the operator's physique or the like.

Image object 3120 includes a toggle button 3121 for turning on or off the function of stopping left door 21 and right door 22 at a middle position during execution of the push-to-open function (hereinafter also referred to as the "middle position stop function"). In the present embodiment, as shown in Fig. 6, toggle button 3121 is located at the off position by default.

Image object 3120 further includes an entry field 3122 for the operator to enter the position at which left door 21 and right door 22 should stop when the operator turns on the middle position stop function. Note that in the present embodiment, 615 mm indicates the fully open state. Image object 3120 further includes a button 3123 for confirming the value entered into entry field 3122.

Image object 3120 further includes a button 3124 for setting the middle position by teaching. When button 3124 is selected, the screen displayed on touch screen 310 transitions from settings screen 310G to another settings screen, and the servo lock function is disabled. In this state, when the operator opens left door 21 or right door 22 to a desired position and performs a predetermined operation on the settings screen after the transition, the open position can be set as the middle position.

This configuration enables opening of left door 21 and right door 22 to positions desired by the operator by the push-to-open function.

The above has described, by way of example, a case where the push-to-open function and the middle position stop function are common to left door 21 and right door 22, but the present disclosure is not limited thereto. Setting screen 310G of operation device 30 may be configured such that the push-to-open function and the middle position stop function can be set individually for left door 21 and right door 22.

Note that touch panel 312 and input device 320 correspond to the "input device" of the present disclosure.

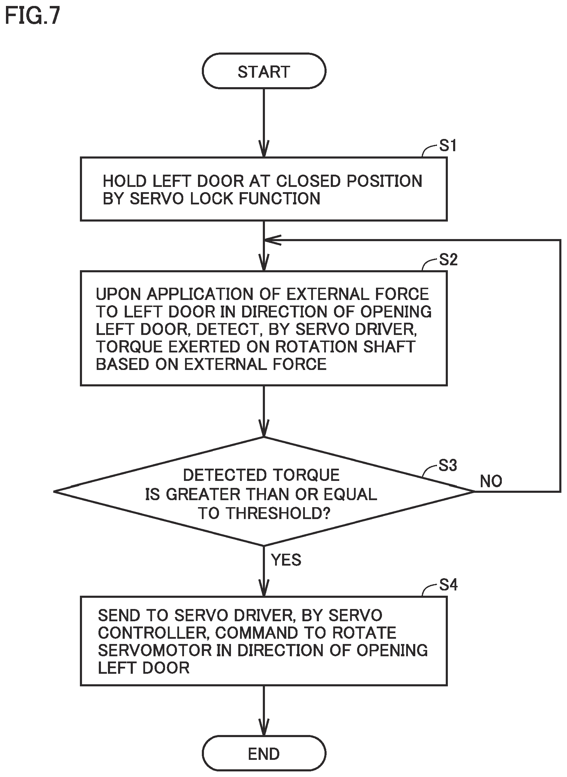

Fig. 7 is a flowchart showing a process flow when an operator uses the push-to-open function to open left door 21.

As shown in Fig. 7, servo system SYS holds left door 21 at the closed position by the servo lock function (step S1). When an external force is applied to left door 21 in the direction of opening left door 21, servomotor 60 detects torque exerted on rotation shaft 62 based on the external force (step S2).

Servo controller 81 determines whether the detected torque is greater than or equal to threshold Th (step S3). When the torque is greater than or equal to threshold Th (YES in step S3), the servo controller sends, to servo driver 70, a command to rotate servomotor 60 in the direction of opening left door 21 (step S4). When the torque is less than threshold Th (NO in step S3), servo driver 70 returns the process to step S2.

Note that the process flow shown in Fig. 7 also applies when right door 22 is opened using the push-to-open function.

### <Summary>

For the sake of description, focusing on left door 21 among left door 21 and right door 22, a summary of machine tool 1 is as follows. Note that the same applies in the case of right door 22.
(1) Machine tool 1 includes left door 21, and servo system SYS that controls opening and closing of left door 21. Servo system SYS includes servomotor 60 that has rotation shaft 62 and opens and closes doors 21, 22 upon rotation of rotation shaft 62, servo driver 70 that operates servomotor 60, and controller 81 connected to servo driver 70.

With left door 21 held at a closed position by servo system SYS, upon application of an external force to left door 21 in a direction of opening left door 21, servo driver 70 detects torque exerted on rotation shaft 62 by the external force. Provided that the torque is greater than or equal to threshold Th, servo controller 81 sends, to servo driver 70, a command to rotate servomotor 60 in the direction of opening door 21.

With this configuration, left door 21 can be opened without operating operation device 30.

(2) Machine tool 1 further includes operation device 30 communicatively connected to servo controller 81. Operation device 30 accepts an operator's operation (first operation) of changing threshold Th. With this configuration, threshold Th according to the operator can be set.

(3) Operation device 30 includes display 311 that displays image object 3110 (Fig. 6) indicating a plurality of (in the present embodiment, five) levels of threshold Th, and touch panel 312 that accepts, as the operator's operation, an operation of selecting one level from the plurality of levels.

(4) When operation device 30 accepts an operator's operation (second operation), servo controller 81 disables a function of sending the command to servo driver 70, provided that the torque is greater than or equal to threshold Th. Specifically, the push-to-open function is disabled. This configuration can satisfy the request of the operator who considers the push-to-open function unnecessary.

(5) The above-described command is a command to move left door 21 to a specified position. With this configuration, the operator can move the closed left door 21 to a predetermined position by applying an external force to left door 21 such that torque greater than or equal to threshold Th is exerted on rotation shaft 62.

(6) The specified position is a position at which left door 21 is fully open. With this configuration, the operator can move the closed left door 21 to the fully open position by applying an external force to left door 21 such that torque greater than or equal to threshold Th is exerted on rotation shaft 62.

(7) Machine tool 1 further includes machining area 100 in which a workpiece is machined. Left door 21 is a sliding door that separates machining area 100 from a space external to machine tool 1. This configuration facilitates access to machining area 100.

(8) With left door 21 held at an open position by servo system SYS, upon application of an external force to left door 21 in a direction of closing left door 21, controller 81 holds left door 21 open even when torque exerted on rotation shaft 62 becomes greater than or equal to threshold Th by an external force in a direction of closing left door 21 (in the positive direction of the Z-axis in Fig. 3).

With this configuration, as described above, even if an external force greater than or equal to a certain level is applied to the open left door 21 in the closing direction, left door 21 does not close automatically. In other words, servo system SYS does not have the "push-to-close" function. Therefore, the standards applicable to the machine tool can be satisfied.

### <Modifications>

### (1) First Modification

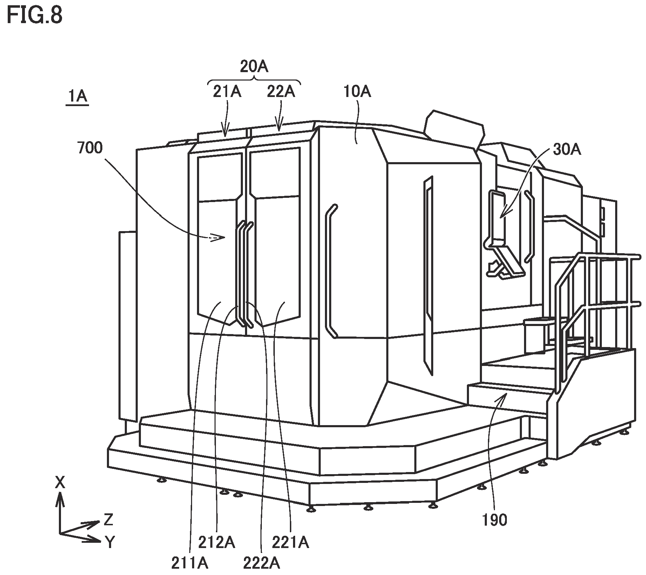

Fig. 8 is a perspective view of a machine tool of a type different from that of machine tool 1. As shown in Fig. 8, a machine tool 1A includes a main body 10A, a door portion 20A, and an operation device 30A. Note that machine tool 1A is a horizontal machining center.

Main body 10A includes a setup station 700. Door portion 20A includes a door 21A (hereinafter also referred to as a "left door 21A") located on the left and a door 22A (hereinafter also referred to as a "right door 22A") located on the right in a front view of machine tool 1A. Left door 21A and right door 22A are sliding doors. Left door 21A and right door 22A are sliding doors that separate setup station 700 from the space external to machine tool 1A.

Left door 21A includes a window portion 211A and a handle 212A. Right door 22A includes a window portion 221A and a handle 222A. Handle 212A is provided on the right door 22A side in the Y-axis direction. Handle 222A is provided on the left door 21A side in the Y-axis direction. Handles 212A, 222A extend in the X-axis direction (vertical direction).

In the state shown in Fig. 8, left door 21A and right door 22A are closed. Left door 21A and right door 22A are in contact with each other at ends thereof. When left door 21A and right door 22A open, the doors face each other in the Y-axis direction. When left door 21A and right door 22A open, the doors are housed inside machine tool 1A. Left door 21A and right door 22A are housed within the space where setup station 700 is installed.

Machine tool 1A including left door 21A and right door 22A can also be configured to have the push-to-open function and the middle position stop function described above, similarly to machine tool 1.

### (2) Second Modification

The above has described an example in which a machine tool includes left and right doors, but only one door may be provided.

### (3) Third Modification

The default value of threshold Th is predetermined in the above description, but the present disclosure is not limited thereto. A predetermined number of trials (operations of applying an external force to the door) may be performed to estimate an average torque, and use the estimated average torque as threshold Th.

### (4) Fourth Modification

In the above description, servo controller 81 controls opening of the door to which an external force has been applied when the torque becomes greater than or equal to threshold Th. However, the present disclosure is not limited to thereto, and servo controller 81 may be configured to control opening of the door to which an external force has been applied when the value of the armature current of servomotor 60 becomes greater than or equal to a threshold.

### (5) Fifth Modification

The above has described, by way of example, a configuration in which servo driver 70 detects torque, but the present disclosure is not limited thereto. Servo controller 81 may detect torque instead of servo driver 70.

Although the embodiment of the present invention has been described, it should be understood that the embodiment disclosed herein has been presented for the purpose of illustration and non-restrictive in every respect. It is therefore intended that the scope of the present invention is defined by claims, and encompasses all modifications and variations equivalent in meaning and scope to the claims.

### CROSS REFERENCE TO RELATED APPLICATIONS

This nonprovisional application is based on Japanese Patent Application No. 2025-094787 filed on June 6, 2025 with the Japan Patent Office, the entire contents of which are hereby incorporated by reference.

## Claims

1. A machine tool (1, 1A) comprising:
a door (21, 21A, 22, 22A); and
a servo system (SYS) that controls opening and closing of the door (21, 21A, 22, 22A), wherein
the servo system (SYS) includes
a servomotor (60) that has a rotation shaft (62) and opens and closes the door (21, 21A, 22, 22A) upon rotation of the rotation shaft (62),
a servo driver (70) that operates the servomotor (60), and
a controller (81) connected to the servo driver (70),
with the door (21, 21A, 22, 22A) held at a closed position by the servo system (SYS), upon application of an external force to the door (21, 21A, 22, 22A) in a direction of opening the door (21, 21A, 22, 22A), the servo driver (70) or the controller (81) detects torque exerted on the rotation shaft (62) by the external force, and
provided that the torque is greater than or equal to a threshold determined in advance, the controller (81) sends, to the servo driver (70), a command to rotate the servomotor (60) in the direction of opening the door (21, 21A, 22, 22A).

2. The machine tool (1, 1A) according to claim 1, further comprising an operation device (30) communicatively connected to the controller (81),
wherein the operation device (30) accepts a first operation of changing the threshold.

3. The machine tool (1, 1A) according to claim 2, wherein the operation device (30) includes
a display (311) that displays an image (3110) indicating a plurality of levels of the threshold, and
an input device (312, 320) that accepts, as the first operation, an operation of selecting one level from the plurality of levels.

4. The machine tool (1, 1A) according to claim 3, wherein when the operation device (30) accepts a second operation, the controller (81) disables a function of sending the command to the servo driver (70), provided that the torque is greater than or equal to the threshold.

5. The machine tool (1, 1A) according to any one of claims 1 to 4, wherein the command is a command to move the door (21, 21A, 22, 22A) to a specified position.

6. The machine tool (1, 1A) according to claim 5, wherein the specified position is a position at which the door (21, 21A, 22, 22A) is fully open.

7. The machine tool (1) according to any one of claims 1 to 6, further comprising a machining area (100) in which a workpiece is machined,
wherein the door (21, 22) is a sliding door that separates the machining area (100) from a space external to the machine tool (1).

8. The machine tool (1A) according to any one of claims 1 to 6, further comprising a setup station (700),
wherein the door (21A, 22A) is a sliding door that separates the setup station (700) from a space external to the machine tool (1).

9. The machine tool (1, 1A) according to any one of claims 1 to 8, wherein with the door (21, 21A, 22, 22A) held at an open position by the servo system (SYS), upon application of an external force to the door (21, 21A, 22, 22A) in a direction of closing the door (21, 21A, 22, 22A), the controller (81) holds the door (21, 21A, 22, 22A) open even when torque exerted on the rotation shaft (62) by an external force in the direction of closing the door (21, 21A, 22, 22A) becomes greater than or equal to the threshold.

10. A control method for a machine tool door, the control method comprising:
holding, by a servo system (SYS), a door (21, 21A, 22, 22A) of a machine tool (1, 1A) at a closed position, the servo system (SYS) including a servomotor (60), a servo driver (70), and a controller (81), the servo system (SYS) controlling opening and closing of the door (21, 21A, 22, 22A);
with the door (21, 21A, 22, 22A) held at the closed position, upon application of an external force to the door (21, 21A, 22, 22A) in a direction of opening the door (21, 21A, 22, 22A), detecting, by the servo driver (70) or the controller (81), torque exerted on the servomotor (60) by the external force; and
provided that the torque is greater than or equal to a predetermined threshold, sending to the servo driver (70), by the controller (81), a command to rotate the servomotor (60) in the direction of opening the door (21, 21A, 22, 22A).
